# NOUVEAU FASCICULE DE BREVET EUROPEEN

(11) **EP 2 836 684 B2**
(45) Date de publication et mention de la décision concernant l'opposition: **01.01.2020**
(45) Mention de la délivrance du brevet: 01.03.2017
(21) Numéro de dépôt: 13720464.0
(22) Date de dépôt: 09.04.2013
(51) Int. Cl.: F01D 9/02, F01D 11/00

(54) **TURBOMACHINE, TEL QU'UN TURBORÉACTEUR OU UN TURBOPROPULSEUR D'AVION**
TURBOMASCHINE, WIE TURBOSTRAHLTRIEBWERK ODER TURBOPROPELLERTRIEBWERK FÜR FLUGZEUGE
TURBOMACHINE, SUCH AS AIRCRAFT TURBOJET ENGINE OR TURBOPROPELLER ENGINE

(30) Priorité: 11.04.2012 FR 1253338
(43) Date de publication de la demande: 18.02.2015
(73) Titulaire: Safran Aircraft Engines, 75015 Paris (FR)
(72) Inventeur: LEGLAYE, François, F-77550 Moissy Cramayel Cedex (FR); D'HERBIGNY, Emeric, F-77550 Moissy Cramayel Cedex (FR)
(74) Mandataire: Robert, Mathias
(86) Numéro de dépôt international: PCT/FR2013/050768
(87) Numéro de publication internationale: WO 2013/153322

(56) Documents cités:
- EP-A1- 0 615 055
- EP-A2- 1 391 582
- FR-A1- 2 840 974
- US-A1- 2007 134 088
- US-A1- 2009 169 370
- US-A1- 2010 307 166
- US-A1- 2011 179 798
- US-B1- 6 199 871
- US-B2- 7 527 469

## Description

La présente invention concerne une turbomachine, telle qu'un turboréacteur ou un turbopropulseur d'avion.

Comme cela est connu notamment des documents FR 2 840 974, FR 2 937 098 et FR 2 921 463 au nom de la Demanderesse, la chambre annulaire de combustion d'une turbomachine comporte classiquement des parois de révolution coaxiales qui s'étendent l'une à l'intérieur de l'autre, appelées virole interne et virole externe, et qui sont reliées à leurs extrémités amont par une paroi annulaire de fond de chambre comportant des ouvertures de montage d'injecteurs de carburant.

En fonctionnement, une partie du débit d'air fourni par un compresseur d'alimentation de la chambre passe à travers des ouvertures de la paroi de fond de chambre et est mélangé au carburant amené par les injecteurs, ce mélange air/carburant étant ensuite brûlé à l'intérieur de la chambre. Une autre partie de ce débit d'air contourne la chambre de combustion puis pénètre dans la chambre à travers des multiperforations des viroles interne et externe de la chambre.

Un distributeur sectorisé d'entrée de turbine est monté en sortie de la chambre de combustion et comprend des viroles coaxiales entre lesquelles s'étendent des aubes sensiblement radiales. Les viroles du distributeur sont dans le prolongement axial des viroles interne et externe de la chambre de combustion.

Des moyens d'étanchéité sont prévus entre la chambre de combustion et le distributeur, en particulier entre les extrémités aval des viroles interne et externe de la chambre de combustion et les extrémités amont des viroles interne et externe du distributeur de turbine.

Plus précisément, l'extrémité aval de chaque virole de la chambre de combustion comporte un rebord dont une partie radiale est prolongée par une partie cylindrique s'étendant vers l'aval. De plus, l'extrémité amont de chaque virole du distributeur comporte un rebord radial de plus faible dimension que la partie radiale précitée du rebord correspondant de la chambre de combustion.

Les moyens d'étanchéité comportent des lamelles d'étanchéité s'étendant radialement et circonférentiellement le long de chaque secteur, prenant chacune appui de façon étanche sur une face radiale du rebord correspondant du distributeur et sur l'extrémité libre de la partie axiale du rebord correspondant de la chambre de combustion. Les lamelles sont maintenues en appui sur les rebords à l'aide de moyens élastiques de rappel.

De tels moyens d'étanchéité présentent les inconvénients exposés ci-après.

Tout d'abord, les rebords des viroles de la chambre de combustion sont situés dans le flux d'air de contournement, de sorte que ces parties de la chambre de combustion ont des surfaces d'échange relativement importantes avec le flux d'air froid. Ces surfaces sont donc relativement froides par rapport au reste de la chambre de combustion. Les différences de température au sein des viroles de la chambre de combustion peuvent générer des contraintes de flexion, ce qui nuit à sa durée de vie.

En outre, une telle structure oblige à prévoir sur les viroles de la chambre de combustion, des rebords ayant des dimensions relativement importantes, ce qui augmente la masse de l'ensemble.

Les déplacements axiaux entre la chambre de combustion et le distributeur de turbine peuvent endommager les lamelles et/ou générer des fuites. D'une manière générale, de telles lamelles radiales sont peu étanches, ce qui nuit aux performances globales de la turbomachine (consommation en carburant, pollution, domaine de rallumage, ...) et expose l'extrémité aval de la chambre de combustion à des gradients thermiques azimutaux ou circonférentiels.

En outre, dans l'art antérieur, lorsque la chambre de combustion est fixée à l'amont par un système de broche ou un bridage amont par exemple, il est nécessaire de prévoir des organes d'appui au niveau des extrémités aval des viroles interne et externe de la chambre de combustion. Chaque organe d'appui est généralement annulaire et présente une section en forme de U ou d'épingle. Chaque organe d'appui s'étend radialement vers l'intérieur ou vers l'extérieur, entre le rebord correspondant de la virole interne ou de la virole externe de la chambre de combustion et un carter interne ou un carter externe de la chambre. Les organes d'appui limitent les déplacements relatifs entre les rebords de la chambre de combustion et les rebords du distributeur, et donc également l'endommagement des lamelles.

Ces organes d'appui sont nécessaires afin d'assurer l'étanchéité des lamelles mais ont une masse importante. En outre, des criques ou des fissures dues aux sollicitations thermiques et/ou mécaniques peuvent apparaître dans les organes d'appui. Enfin, des jeux fonctionnels doivent être définis avec précision entre les organes d'appui et les carters interne et externe sur lesquels ils prennent appui.

L'invention a notamment pour but d'apporter une solution simple, efficace et économique à ces problèmes.

A cet effet, elle propose une turbomachine, telle qu'un turboréacteur ou un turbopropulseur d'avion, comportant une chambre annulaire de combustion délimitée par une virole interne et une virole externe, un distributeur de turbine agencé en aval de la chambre de combustion, l'extrémité aval de la virole externe et/ou de la virole interne de la chambre comportant un rebord radial disposé en regard d'un rebord radial de l'extrémité amont du distributeur, des moyens d'étanchéité comportant au moins une lamelle s'étendant entre lesdits rebords de façon à assurer l'étanchéité entre la chambre de combustion et le distributeur, caractérisée en ce que la lamelle d'étanchéité s'étend axialement et circonférentiellement entre lesdits rebords et prend appui radialement de façon étanche sur les extrémités libres desdits rebords, et en ce que les extrémités libres des rebords comportent des congés, la lamelle présentant des zones en creux épousant les formes des extrémités libres des rebords.

De cette manière, la dimension radiale du rebord de la chambre de combustion peut être réduite, ce qui a pour effet de réduire la masse de l'ensemble et de diminuer les surfaces d'échange avec l'air de contournement. La température de l'extrémité aval de la virole correspondante de la chambre de combustion est ainsi augmentée, de sorte que les écarts de température au sein de cette virole et les contraintes de flexion qui en découlent sont sensiblement réduits.

De plus, la lamelle d'étanchéité étant orientée axialement, au moins dans ses zones d'appui sur les rebords précités, elle assure toujours une bonne étanchéité, même en cas de déplacement axial important de la chambre de combustion par rapport au distributeur de turbine. Ceci permet d'obtenir un rendement élevé de la turbomachine et de pouvoir s'affranchir de la présence des organes d'appui. La masse de la chambre de combustion peut donc être considérablement réduite.

Avantageusement, l'extrémité libre du rebord de la chambre de combustion est axialement en regard de l'extrémité libre du rebord du distributeur.

De préférence, la turbomachine comporte des moyens de rappel élastique tendant à solliciter la lamelle d'étanchéité en appui sur les extrémités libres des rebords.

Selon une caractéristique de l'invention, le distributeur comporte au moins un plot de positionnement dont une extrémité s'engage dans une encoche de forme complémentaire de la lamelle, de façon à immobiliser la lamelle dans sa direction circonférentielle et dans sa direction axiale.

En outre, la turbomachine peut comporter un capot s'étendant circonférentiellement et axialement, de façon à recouvrir, au moins partiellement, les rebords de la chambre et du distributeur ainsi que la lamelle d'étanchéité.

Le capot permet de réduire encore les échanges thermiques entre l'extrémité aval de la virole correspondante de la chambre de combustion et l'air de contournement.

Dans ce cas, le capot peut être fixé à l'aide d'une vis ou d'un rivet formant le plot de positionnement dont l'extrémité libre s'engage dans l'encoche correspondante de la lamelle d'étanchéité.

Le capot peut avoir une section en forme générale de U comportant une base s'étendant axialement et deux flancs s'étendant radialement vers l'intérieur depuis la base, respectivement un premier flanc s'étendant radialement en amont du rebord de la chambre de combustion et un second flanc s'étendant radialement en aval du rebord du distributeur.

Selon une possibilité de l'invention, le second flanc est fixé à une bride du distributeur, le premier flanc étant écarté du rebord de l'extrémité aval de la chambre de combustion d'un jeu déterminé, par exemple inférieur à 3 mm.

Un tel jeu permet de compenser d'éventuels effets de dilation et évite ainsi que le capot soit déformé par appui du rebord de la chambre de combustion sur le premier flanc.

Selon une autre caractéristique de l'invention, les moyens de rappel élastique comportent au moins un organe élastique à action radiale prenant appui d'une part sur le capot et d'autre part sur la lamelle d'étanchéité.

De plus, le distributeur de turbine peut être sectorisé, une lamelle et/ou un capot s'étendant circonférentiellement le long de chaque secteur de turbine.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une demi-vue en coupe longitudinale d'une chambre de combustion et d'un distributeur de turbine d'une turbomachine de l'art antérieur,
- la figure 2 est une vue en perspective d'une partie de la chambre et du distributeur de la figure 1, équipés de moyens d'étanchéité,
- la figure 3 est une vue en coupe et de détail, illustrant les moyens d'étanchéité de l'art antérieur situés entre la virole externe de la chambre de combustion et la virole externe du distributeur,
- la figure 4 est une vue en coupe et de détail, illustrant les moyens d'étanchéité de l'art antérieur situés entre la virole interne de la chambre de combustion et la virole interne du distributeur,
- la figure 5 est une vue correspondant à la figure 2, illustrant une forme de réalisation de l'invention,
- la figure 6 est une vue en perspective d'une partie des viroles externes de la chambre et du distributeur de la figure 4, équipés des moyens d'étanchéité associés,
- la figure 7 est une vue en perspective d'une partie des viroles internes de la chambre et du distributeur de la figure 4, équipés des moyens d'étanchéité associés,
- la figure 8 est une vue en coupe et de détail, d'une partie des viroles externes de la chambre et du distributeur de la figure 4, équipés des moyens d'étanchéité associés,
- la figure 9 est une vue en coupe et de détail, d'une partie des viroles internes de la chambre et du distributeur de la figure 4, équipés des moyens d'étanchéité associés.

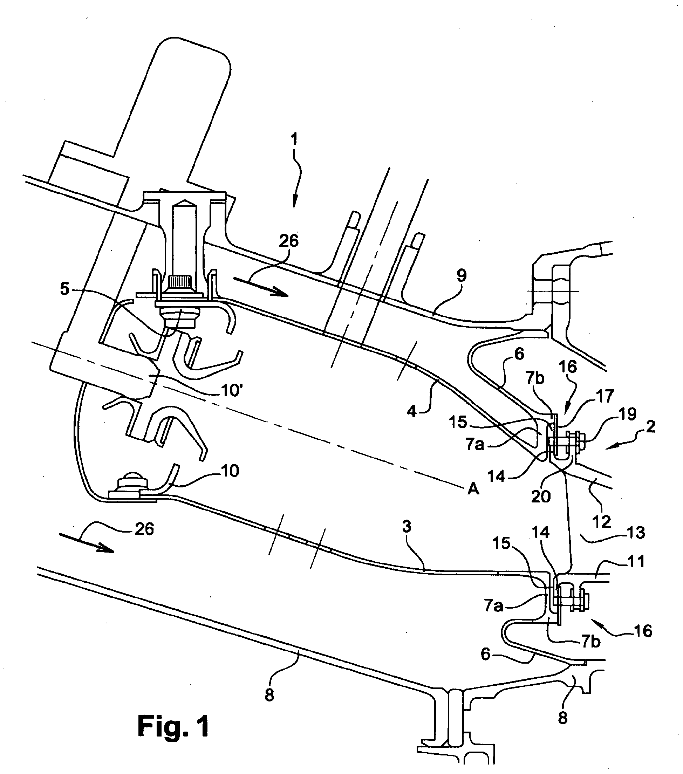

On se réfère d'abord à la figure 1 qui représente une chambre annulaire de combustion 1 d'une turbomachine de l'art antérieur, telle qu'un turboréacteur ou un turbopropulseur d'avion, qui est agencée en aval d'un compresseur et d'un diffuseur (non représentés), et en amont d'un distributeur 2 d'entrée d'une turbine haute-pression.

La chambre de combustion 1 comprend des parois de révolution interne et externe, appelées respectivement virole interne 3 et virole externe 4, qui s'étendent à l'intérieur l'une de l'autre et qui sont reliées en amont à une paroi annulaire de fond de chambre 10.

La chambre de combustion 1 est fixée à l'amont par un système de broche 5 ou un bridage amont par exemple. Afin de limiter la déformation des viroles interne 3 et externe 4, ces dernières sont équipées à leur extrémité aval d'organes d'appui 6 interne et externe. Chaque organe d'appui 6 est annulaire et présente une section en forme de U ou en forme d'épingle. Chaque organe d'appui 6 s'étend radialement vers l'intérieur ou vers l'extérieur, entre un rebord 7 de la virole interne 3 ou de la virole externe 4 de la chambre de combustion 1 et un carter interne 8 ou un carter externe 9 de la chambre 1.

Plus particulièrement, l'extrémité aval de chaque virole 3, 4 de la chambre de combustion 1 comporte un rebord 7 comprenant une partie radiale 7a prolongée par une partie cylindrique 7b s'étendant vers l'aval.

La paroi annulaire de fond de chambre 10 comprend des ouvertures à travers lesquelles passe de l'air provenant du compresseur et du carburant amené par des injecteurs 10' fixés sur le carter externe 9.

Le distributeur 2 est fixé en aval de la chambre 1 par des moyens appropriés et comprend des viroles annulaires interne 11 et externe 12 qui s'étendent l'une à l'intérieur de l'autre et qui sont reliées entre elles par des pales 13 sensiblement radiales. La virole externe 12 du distributeur 2 est alignée axialement avec la partie d'extrémité aval de la virole externe 4 de la chambre 1, et sa virole interne 11 est alignée axialement avec la partie d'extrémité aval de la virole interne 3 de la chambre 1. L'extrémité amont de chaque virole 11, 12 du distributeur 2 comporte un rebord radial 14 de dimension plus réduite que la partie radiale 7a du rebord correspondant 7 de la chambre de combustion 1.

Ce distributeur 2 est sectorisé et formé de plusieurs secteurs contigus sur une circonférence centrée sur l'axe de révolution A de la chambre 1. Les secteurs de distributeur sont par exemple au nombre de quatorze.

Les rebords internes 7, 14 des viroles internes 3, 11 de la chambre 1 et du distributeur 2 délimitent un espace annulaire interne 15 qui débouche à une extrémité dans la chambre 1 et qui est fermé à son autre extrémité par des moyens d'étanchéité 16.

De même, les rebords externes 7, 14 des viroles externes 4, 12 de la chambre 1 et du distributeur 2 délimitent un espace annulaire externe 15 qui débouche à une extrémité dans la chambre 1 et qui est fermé à son autre extrémité par des moyens d'étanchéité 16.

On décrira dans ce qui suit les moyens d'étanchéité 16 situés au niveau des espaces annulaires 15.

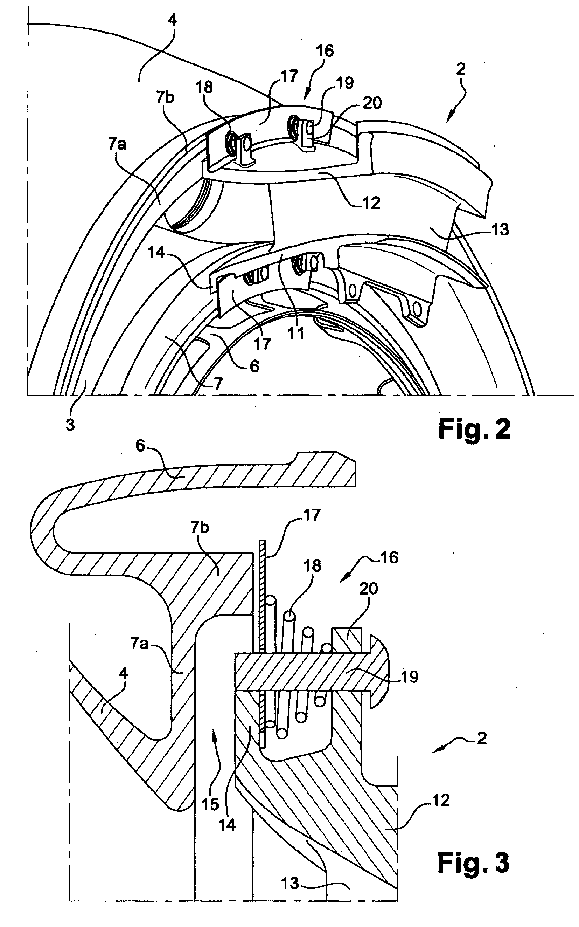

Comme cela est mieux visible aux figures 2 à 4, ces moyens d'étanchéité 16 comportent des lamelles d'étanchéité 17 s'étendant radialement et circonférentiellement le long de chaque secteur de distributeur 2. Chaque lamelle 17 prend appui de façon étanche sur une face radiale du rebord 14 correspondant du distributeur 2 et sur l'extrémité libre de la partie axiale 7b du rebord 7 correspondant de la chambre de combustion 1. Les lamelles 17 sont maintenues en appui sur les rebords 7, 14 à l'aide de moyens élastiques de rappel.

Ces moyens élastiques sont des ressorts hélicoïdaux 18 de forme conique, montés autour de vis 19 qui sont vissées dans des pattes 20 ou brides s'étendant radialement depuis la virole correspondante 11, 12 du distributeur 2. La partie rétrécie de chaque ressort 18 prend appui sur une face radiale de la patte 20 correspondante, la partie élargie prenant appui sur la lamelle d'étanchéité 17. Les extrémités des vis 19 sont engagées dans des trous de la lamelle d'étanchéité 17, de façon à assurer son maintien en position.

Comme indiqué précédemment, l'utilisation de tels moyens d'étanchéité 19 augmente la masse de l'ensemble, réduit la durée de vie de la chambre de combustion 1 et pénalise les performances globales de la turbomachine.

En outre, les organes d'appui 6 ont une masse importante et peuvent être le lieu d'apparition de criques ou des fissures dues à des sollicitations thermiques et/ou mécaniques. Enfin, des jeux fonctionnels doivent être définis avec précision entre les organes d'appui 6 et les carters interne et externe 8, 9 sur lesquels ils prennent appui.

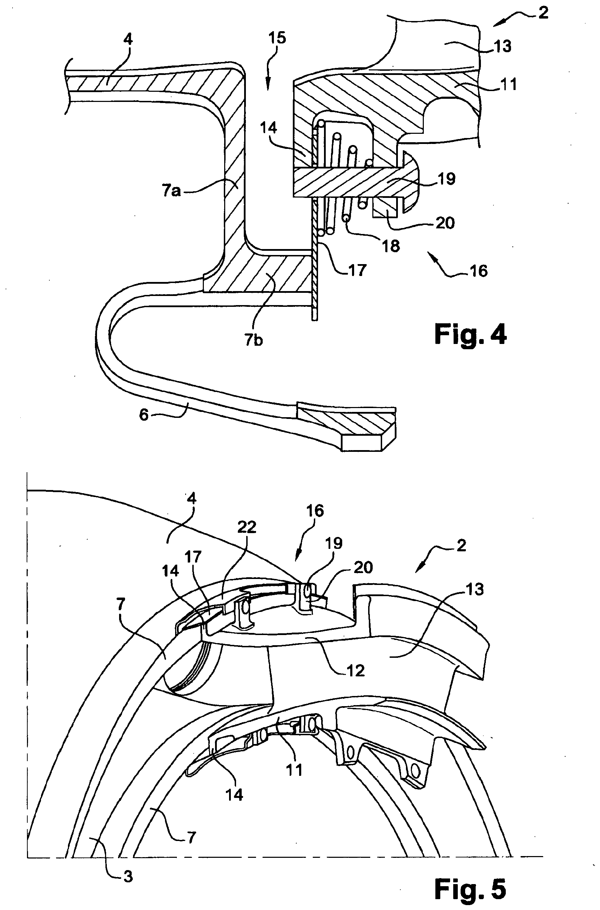

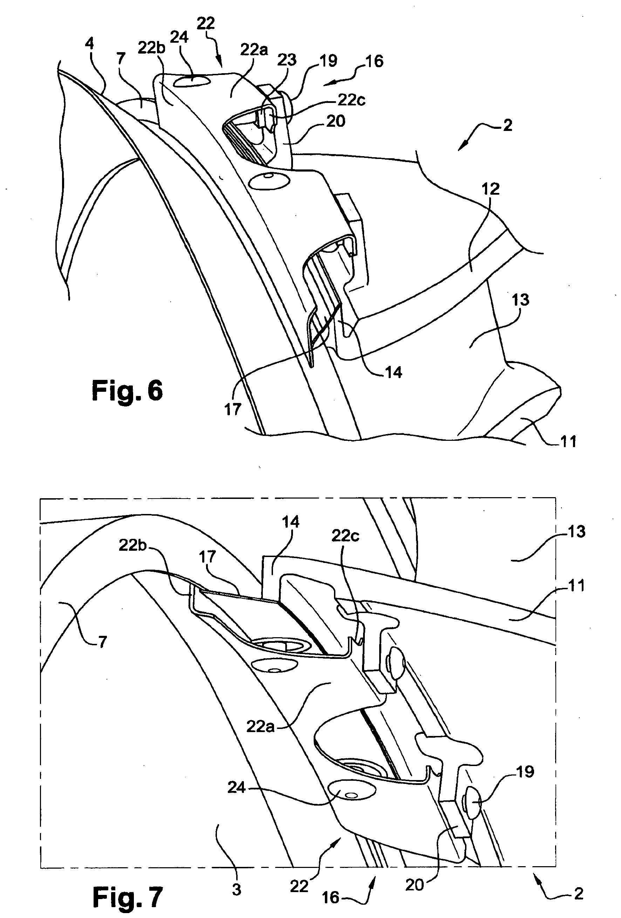

Les figures 5 à 9 illustrent une partie d'une turbomachine selon l'invention. Sur ces figures, les organes d'appui 6 ne sont pas nécessairement toujours représentés, afin de faciliter la compréhension des dessins.

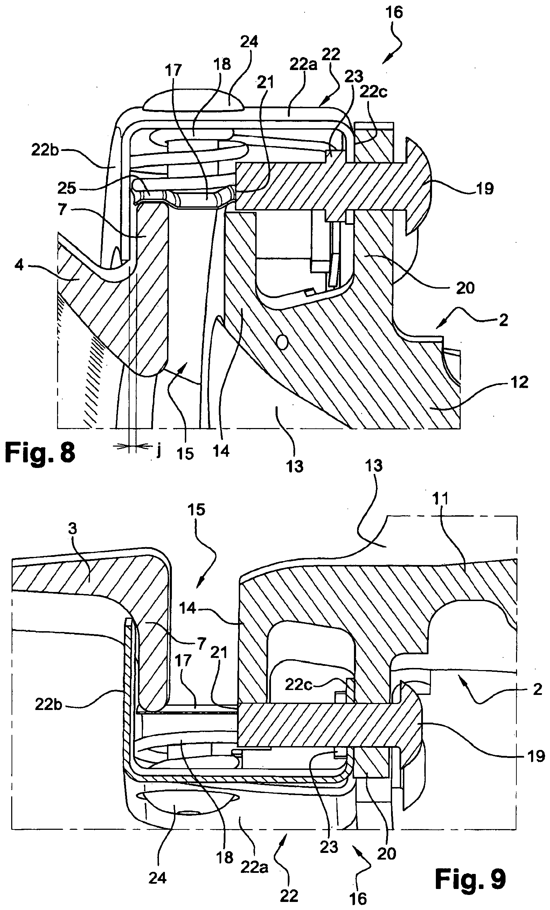

Comme cela est mieux visible aux figures 8 et 9 dans l'invention, les rebords 7 des viroles interne 3 et externe 4 de la chambre de combustion 1 s'étendent radialement et sont dépourvus de partie axiale. L'extrémité libre de chaque rebord 7 est située radialement en regard de l'extrémité libre du rebord radial 14 correspondant du distributeur 2. Une lamelle d'étanchéité 17 s'étend axialement et circonférentiellement, au niveau de chaque secteur de distributeur 2, entre lesdits rebords radiaux 7, 14 et prend appui de façon étanche sur les faces des extrémités libres desdits rebords 7, 14.

La lamelle d'étanchéité 17 comporte des encoches 21 débouchant au niveau de son bord aval, dans laquelle sont engagées les extrémités des vis 19 fixées sur les pattes 20 du distributeur 2, de façon à immobiliser la lamelle 17.

Ces vis 19 servent également à la fixation d'un capot 22 s'étendant circonférentiellement et axialement, de façon à recouvrir, au moins partiellement, les rebords correspondants 7, 14 de la chambre 1 et du distributeur 2 ainsi que la lamelle d'étanchéité 17.

Le capot 22 a une section en forme générale de U comportant une base 22a s'étendant axialement et deux flancs 22b, 22c s'étendant radialement vers l'intérieur depuis la base 22a, respectivement un premier flanc 22b s'étendant radialement en amont du rebord 7 de la chambre de combustion 1 et un second flanc 22c s'étendant radialement en aval du rebord 14 du distributeur 1.

Le second flanc 22c est fixé aux pattes 20 du distributeur 2 à l'aide des vis 19 et d'écrous 23. Le premier flanc 22b est écarté du rebord de l'extrémité aval de la chambre de combustion 1 d'un jeu j déterminé (figure 8), par exemple inférieur à 3 mm. Un tel jeu permet de compenser d'éventuels effets de dilatation et évite ainsi que le capot 22 soit déformé par appui du rebord 7 de la chambre de combustion 1 sur le premier flanc 22b.

Des moyens de rappel élastique contraignent la lamelle d'étanchéité 17 en appui sur les extrémités libres des rebords 7, 14. Ces moyens de rappel comportent des ressorts de compression hélicoïdaux 18 dont une extrémité est en appui sur la lamelle 17 et dont l'autre extrémité est en appui sur la base 22a du capot 22. Les ressorts 18 sont montés autour de vis ou de plots 24 fixés dans la base 22a du capot 22.

Les extrémités libres des rebords 7 et/ou 14 comportent des congés. La lamelle 17 comporte des zones en creux 25 épousant les formes des extrémités libres des rebords 7, 14 présentant des congés (forme de réalisation de la figure 8).

La présence des congés permet d'éviter toute détérioration des lamelles 17.

On notera que, dans la forme de réalisation de la figure 9 qui n'appartient pas à l'invention, les lamelles 17 autorisent un grand déplacement axial de la chambre de combustion 1 par rapport au distributeur 2, sans pénaliser les performances des moyens d'étanchéité 16. La présence de zones en creux 25 permet de mieux supporter un décalage radial entre les rebords 7, 14 et donc un léger pivotement de la lamelle 17 autour des extrémités présentant les congés.

On remarque que, dans l'invention, les dimensions radiales des rebords 7 de la chambre de combustion 1 sont réduites et que les organes d'appui 6 ne sont pas nécessaires, ce qui a pour effet de réduire la masse de l'ensemble et de diminuer les surfaces d'échange avec l'air de contournement 26 (figure 1). La température de l'extrémité aval de la virole correspondante 3, 4 de la chambre de combustion 1 est ainsi augmentée, de sorte que les écarts de température au sein de cette virole 3, 4 et les contraintes de flexion qui en découlent sont sensiblement réduits.

De plus, la lamelle d'étanchéité 17 étant orientée axialement, au moins dans ses zones d'appui sur les rebords 7, 14 précités, elle assure toujours une bonne étanchéité, même en cas de déplacement axial de la chambre de combustion 1 par rapport au distributeur de turbine 2. Le rendement de la turbomachine est ainsi augmenté.

Le capot 22 permet de réduire encore les échanges thermiques entre l'extrémité aval de la virole correspondante 3, 4 de la chambre de combustion 1 et l'air de contournement 26. Ce capot 22 peut être ajouré au niveau de sa base 22a et de son second flanc 22c, comme cela est visible aux figures 5 à 7. Au contraire, le premier flanc 22b est de préférence continu et dépourvu d'ouverture, de façon à limiter le refroidissement de l'extrémité aval de la virole correspondante 3, 4 de la chambre de combustion 1 par le flux d'air de contournement 26 dirigé de l'amont vers l'aval et impactant directement le premier flanc 22b.

## Revendications

1. Turbomachine comportant une chambre annulaire de combustion (1) délimitée par une virole interne (3) et une virole externe (4), un distributeur de turbine (2) agencé en aval de la chambre de combustion (1), l'extrémité aval de la virole externe (4) et/ou de la virole interne (3) de la chambre (1) comportant un rebord radial (7) disposé en regard d'un rebord radial (14) de l'extrémité amont du distributeur (2), et des moyens d'étanchéité (16) comportant au moins une lamelle (17) s'étendant entre lesdits rebords (7, 14) de façon à assurer l'étanchéité entre la chambre de combustion (1) et le distributeur (2), **caractérisée en ce que** la lamelle d'étanchéité (17) s'étend axialement et circonférentiellement entre lesdits rebords (7, 14) et prend appui radialement de façon étanche sur les extrémités libres desdits rebords (7, 14), et **en ce que** les extrémités libres desdits rebords (7, 14) comportent des congés, la lamelle (17) présentant des zones en creux épousant les formes des extrémités libres des rebords (7, 14).

2. Turbomachine selon la revendication 1, **caractérisée en ce que** l'extrémité libre du rebord (7) de la chambre de combustion (1) est axialement en regard de l'extrémité libre du rebord (14) du distributeur (2).

3. Turbomachine selon la revendication 1 ou 2, **caractérisée en ce qu'**elle comporte des moyens de rappel élastique (18) tendant à solliciter la lamelle d'étanchéité (17) en appui sur les extrémités libres des rebords (7, 14).

4. Turbomachine selon l'une des revendications 1 à 3, **caractérisée en ce que** le distributeur (2) comporte au moins un plot de positionnement (19) dont une extrémité s'engage dans une encoche (21) de forme complémentaire de la lamelle (17), de façon à immobiliser la lamelle (17) dans sa direction circonférentielle et dans sa direction axiale.

5. Turbomachine selon l'une des revendications 1 à 4, **caractérisée en ce qu'**elle comporte un capot (22) s'étendant circonférentiellement et axialement, de façon à recouvrir au moins partiellement les rebords (7, 14) de la chambre (1) et du distributeur (2) ainsi que la lamelle d'étanchéité (17).

6. Turbomachine selon la revendication 5, **caractérisée en ce que** le capot (22) est fixé à l'aide d'une vis (19) ou d'un rivet formant le plot de positionnement dont l'extrémité libre s'engage dans l'encoche (21) correspondante de la lamelle d'étanchéité (17).

7. Turbomachine selon la revendication 5 ou 6, **caractérisée en ce que** le capot (22) a une section en forme générale de U comportant une base (22a) s'étendant axialement et deux flancs (22b, 22c) s'étendant radialement vers l'intérieur depuis la base (22a), respectivement un premier flanc (22b) s'étendant radialement en amont du rebord (7) de la chambre de combustion (1) et un second flanc (22c) s'étendant radialement en aval du rebord (14) du distributeur (2).

8. Turbomachine selon la revendication 7, **caractérisée en ce que** le second flanc (22c) est fixé à une bride (20) du distributeur (2), le premier flanc (22b) étant écarté du rebord (7) de l'extrémité aval de la chambre de combustion (1) d'un jeu (j) déterminé, par exemple inférieur à 3 mm.

9. Turbomachine selon les revendications 3 et 5, **caractérisée en ce que** les moyens de rappel élastique comportent au moins un organe élastique (18) à action radiale prenant appui d'une part sur le capot (22) et d'autre part sur la lamelle d'étanchéité (17).

10. Turbomachine selon l'une des revendications 1 à 9, **caractérisée en ce que** le distributeur de turbine (2) est sectorisé, une lamelle (17) et/ou un capot (22) s'étendant circonférentiellement le long de chaque secteur de turbine.

## Patentansprüche

1. Turbomaschine, die eine durch einen Innenmantel (3) und einen Außenmantel (4) abgegrenzte ringförmige Brennkammer (1) umfasst, ein stromabwärts der Brennkammer (1) angeordnetes Turbinenleitrad (2), wobei das stromabwärtige Ende des Außenmantels (4) und/oder des Innenmantels (3) der Kammer (1) einen Radialflansch (7) aufweist, der gegenüber einem Radialflansch (14) des stromaufwärtigen Endes des Turbinenleitrads (2) angeordnet ist, und Dichtungsmittel (16) mit mindestens einer Lamelle (17), die sich zwischen den Flanschen (7, 14) so erstrecken, dass die Dichtheit zwischen der Brennkammer (1) und dem Turbinenleitrad (2) gewährleistet ist, **dadurch gekennzeichnet, dass** sich die Dichtungslamelle (17) axial in Umfangsrichtung zwischen den Flanschen (7, 14) erstreckt und radial an den freien Enden der Flansche (7, 14) abdichtend anliegt, und dadurch, dass die freien Enden der Flansche (7, 14) Ausrundungen umfassen, wobei die Lamelle (17) vertiefte Bereiche aufweist, die an die Formen der freien Enden der Flansche (7, 14) angepasst sind.

2. Turbomaschine nach Anspruch 1, **dadurch gekennzeichnet, dass** das freie Ende des Flansches (7) der Brennkammer (1) dem freien Ende des Flansches (14) des Turbinenleitrads (2) axial gegenüberliegt.

3. Turbomaschine nach Anspruch 1 oder 2, **dadurch gekennzeichnet, dass** sie elastische Rückholmittel (18) umfasst, die die an den freien Enden der Flansche (7, 14) anliegende Dichtungslamelle (17) beanspruchen.

4. Turbomaschine nach einem der Ansprüche 1 bis 3, **dadurch gekennzeichnet, dass** das Turbinenleitrad (2) mindestens ein Positionierungselement (19) aufweist, dessen eines Ende in eine Kerbe (21) mit einer zur Lamelle (17) komplementären Form eingreift, um die Lamelle (17) in ihrer umfänglichen und axialen Richtung zu blockieren.

5. Turbomaschine nach einem der Ansprüche 1 bis 4, **dadurch gekennzeichnet, dass** sie eine Abdeckung (22) umfasst, die sich in Umfangsrichtung und axial so erstreckt, dass die Flansche (7, 14) der Kammer (1) und des Turbinenleitrads (2) sowie die Dichtungslamelle (17) zumindest teilweise bedeckt werden.

6. Turbomaschine nach Anspruch 5, **dadurch gekennzeichnet, dass** die Abdeckung (22) mittels einer Schraube (19) oder eines Nietes befestigt ist, welche das Positionierungselement bilden, dessen freies Ende in die entsprechende Kerbe (21) der Dichtungslamelle (17) eingreift.

7. Turbomaschine nach Anspruch 5 oder 6, **dadurch gekennzeichnet, dass** die Abdeckung (22) einen im Allgemeinen U-förmigen Querschnitt mit einer sich axial erstreckenden Basis (22a) und zwei sich von der Basis (22a) radial nach innen erstreckenden Flanken (22b, 22c) umfasst, nämlich einer ersten Flanke (22b), die sich stromaufwärts des Flansches (7) der Brennkammer (1) radial erstreckt, und einer zweiten Flanke (22c), die sich stromabwärts des Flansches (14) des Turbinenleitrads (2) radial erstreckt.

8. Turbomaschine nach Anspruch 7, **dadurch gekennzeichnet, dass** die zweite Flanke (22c) an einem Klemmflansch (20) des Turbinenleitrads (2) befestigt ist, wobei die erste Flanke (22b) des stromabwärtigen Endes der Brennkammer (1) zum Flansch (7) mit einem vorgegebenen Spiel (j), beispielsweise weniger als 3 mm, beabstandet ist.

9. Turbomaschine nach den Ansprüchen 3 und 5, **dadurch gekennzeichnet, dass** die elastischen Rückholmittel mindestens ein radial wirkendes elastisches Element (18) umfassen, das einerseits an der Abdeckung (22) und andererseits an der Dichtungslamelle (17) anliegt.

10. Turbomaschine nach einem der Ansprüche 1 bis 9, **dadurch gekennzeichnet, dass** das Turbinenleitrad (2) in Segmente unterteilt ist, und sich eine Lamelle (17) und/oder eine Abdeckung (22) in Umfangsrichtung entlang jedes Turbinensegments erstreckt.

## Claims

1. A turbomachine comprising an annular combustion chamber (1) delimited by an internal shell (3) and an external shell (4), a turbine nozzle (2) arranged downstream of the combustion chamber (1), the downstream end of the outer shell (4) and/or the inner shell (3) of the chamber (1) having a radial flange (7) disposed opposite a radial flange (14) of the upstream end of the nozzle (2), and sealing means (16) having at least one platelet (17) extending between said flanges (7, 14) so as to ensure sealing between the combustion chamber (1) and the nozzle (2), **characterized in that** the sealing platelet (17) extends axially and circumferentially between said flanges (7, 14) and is radially supported in a sealed manner on the free ends of said flanges (7, 14), and **in that** the free ends of said flanges (7, 14) have fillets, the platelet (17) having hollow areas matching the shapes of the free ends of the flanges (7, 14).

2. A turbomachine according to claim 1, **characterized in that** the free end of the flange (7) of the combustion chamber (1) is axially opposite the free end of the flange (14) of the nozzle (2).

3. A turbomachine according to claim 1 or 2, **characterized in that** it comprises elastic return means (18) tending to stress the sealing platelet (17) supported by the free ends of the flanges (7, 14).

4. A turbomachine according to one of claims 1 to 3, **characterized in that** the nozzle (2) has at least one positioning pad (19), one end of which engages in a notch (21) having a shape matching that of the platelet (17), so as to immobilize the platelet (17) in its circumferential direction and in its axial direction.

5. A turbomachine according to one of claims 1 to 4, **characterized in that** it comprises a cover (22) extending circumferentially and axially, so as to cover at least partially the flanges (7, 14) of the chamber (1) and the nozzle (2) as well as the sealing platelet (17).

6. A turbomachine according to claim 5, **characterized in that** the cover (22) is fixed by means of a screw (19) or a rivet forming the positioning pad whose free end engages in the corresponding notch (21) of the sealing platelet (17).

7. A turbomachine according to claim 5 or 6, **characterized in that** the cover (22) has a generally U-shaped section having an axially extending base (22a) and two flanks (22b, 22c) extending radially inwards from the base (22a), respectively a first flank (22b) extending radially upstream of the flange (7) of the combustion chamber (1) and a second flank (22c) extending radially downstream of the flange (14) of the nozzle (2).

8. A turbomachine according to claim 7, **characterized in that** the second flank (22c) is fixed to a clamp (20) of the nozzle (2), the first flank (22b) being spaced from the flange (7) of the downstream end of the combustion chamber (1) by a specified clearance (j), for example less than 3mm.

9. A turbomachine according to claims 3 and 5, **characterized in that** the elastic return means comprise at least one radially acting elastic member (18) supported on the one hand by the cover (22) and on the other hand by the sealing platelet (17).

10. A turbomachine according to one of claims 1 to 9, **characterized in that** the turbine nozzle (2) is sectorized, a platelet (17) and/or a cover (22) extending circumferentially along each turbine sector.
